# EUROPEAN PATENT APPLICATION

(11) **EP 4 421 365 A1**
(43) Date of publication of application: **28.08.2024**
(21) Application number: 24158430.9
(22) Date of filing: 19.02.2024
(51) Int. Cl.: F16K 27/02, F16K 31/06, F16K 27/00

(54) **FLUID MANAGEMENT DEVICE CAPABLE OF REDUCING HARMFUL HEAT LOSS**

(30) Priority: 23.02.2023 CN 202310189296
(71) Applicant: Zhejiang Sanhua Intelligent Controls Co., Ltd., Shaoxing City, Zhejiang 312500 (CN)
(72) Inventor: WU, Chunqiang, Shaoxing City, 312500 (CN); TAN, Yongxiang, Shaoxing City, 312500 (CN); XU, Yungen, Shaoxing City, 312500 (CN); MENG, Jiafeng, Shaoxing City, 312500 (CN)
(74) Representative: dompatent von Kreisler Selting Werner - Partnerschaft von Patent- und Rechtsanwälten mbB

(57) **Abstract**

A fluid management device includes a control assembly (1), at least two block portions (2), and at least two valve core assemblies. The at least two block portions are hermetically connected to a same control assembly. The valve core assemblies are electrically connected to the control assembly. Each block portion includes a body portion. The body portion defines a mounting channel. A portion of the valve core assembly is located in an inner cavity of the control assembly, and another portion is located in the mounting channel. A gap is formed between two adjacent body portions for separating the body portions so as to reduce the possibility of heat transfer, thereby reducing harmful heat loss of the fluid management device.

## Description

### CROSS-REFERENCE TO RELATED APPLICATION

This patent application claims priority of a Chinese Patent Application No. 202310189296.5, filed on February 23, 2023 and titled "FLUID MANAGEMENT DEVICE", the entire content of which is incorporated herein by reference.

### TECHNICAL FIELD

The present invention relates to the field of fluid management technology, and in particular, to a fluid management device.

### BACKGROUND

Thermal management systems include components such as compressors, internal heat exchangers, and external heat exchangers. The components are communicated through pipelines. Refrigerant circulates in the pipelines. Heat exchange is achieved through changes in the temperature and pressure state of the refrigerant, thereby achieving refrigeration or refrigeration functions in the space. Valves, such as expansion valves and solenoid valves, are provided at various locations in the pipelines to control the on-off of the pipelines and the flow direction of the refrigerant.

In the related art, in order to reduce the space occupied by the valves, multiple valve cores are installed in a same valve seat and communicated through channels inside the valve seat. Since the channels inside the valve seat are relatively close to each other, the fluid in different channels will conduct heat and cause more harmful heat loss. Alternatively, in the related art, the multiple valve cores are respectively installed in adjacent valve body portions of a flow channel plate. Since the valve body portions of the flow channel plate are directly connected, the fluid in adjacent valve body portions conduct heat to each other through the flow channel plate and interfere with one another.

### SUMMARY

In view of the above-mentioned problems in the related art, the present invention provides a fluid management device capable of reducing harmful heat loss.

In order to achieve the above object, the present invention adopts the following technical solution: a fluid management device, including: a control assembly, at least two block portions and at least two valve core assemblies; the at least two block portions being hermetically connected to the control assembly; the at least two valve core assemblies being electrically connected to the control assembly; wherein each of the at least two block portions includes a body portion which defines a mounting channel; a portion of the at least two valve core assemblies is located in an inner cavity of the control assembly, and another portion of the at least two valve core assemblies is located in the mounting channel; a gap is formed between two adjacent body portions.

In the present invention, at least two block portions are hermetically connected with the same control assembly. The valve core assembly has a portion located in the inner cavity of the control assembly and another portion located in the mounting channel of the body portion. A gap is formed between two adjacent body portions. The separation between the body portions reduces the possibility of heat transfer, thereby reducing harmful heat loss of the fluid management device.

### BRIEF DESCRIPTION OF DRAWINGS

FIG. 1 is a perspective view of a fluid management device in accordance with an embodiment of the present invention;
FIG. 2 is an exploded schematic view of the fluid management device in accordance with an embodiment of the present invention;
FIG. 3 is a further exploded schematic view of the fluid management device in accordance with an embodiment of the present invention;
FIG. 4 is a schematic cross-sectional view of the fluid management device in accordance with an embodiment of the present invention;
FIG. 5 is a schematic cross-sectional view of an embodiment of a block portion of the present invention;
FIG. 6 is a schematic cross-sectional view of the block portion in accordance with another embodiment of the present invention;
FIG. 7 is a schematic cross-sectional view of the block portion in accordance with yet another embodiment of the present invention;
FIG. 8 is a perspective view of the fluid management device in accordance with another embodiment of the present invention; and
FIG. 9 is an exploded schematic view of the fluid management device in accordance with another embodiment of the present invention.

### DETAILED DESCRIPTION

Exemplary embodiments will be described in detail here, examples of which are shown in drawings. When referring to the drawings below, unless otherwise indicated, same numerals in different drawings represent the same or similar elements. The examples described in the following exemplary embodiments do not represent all embodiments consistent with this application. Rather, they are merely examples of devices and methods consistent with some aspects of the application as detailed in the appended claims.

The terminology used in this application is only for the purpose of describing particular embodiments, and is not intended to limit this application. The singular forms "a", "said", and "the" used in this application and the appended claims are also intended to include plural forms unless the context clearly indicates other meanings.

It should be understood that the terms "first", "second" and similar words used in the specification and claims of this application do not represent any order, quantity or importance, but are only used to distinguish different components. Similarly, "an" or "a" and other similar words do not mean a quantity limit, but mean that there is at least one; "multiple" or "a plurality of' means two or more than two. Unless otherwise noted, "front", "rear", "lower" and/or "upper" and similar words are for ease of description only and are not limited to one location or one spatial orientation. Similar words such as "include" or "comprise" mean that elements or objects appear before "include" or "comprise" cover elements or objects listed after "include" or "comprise" and their equivalents, and do not exclude other elements or objects. The term "a plurality of" mentioned in the present invention includes two or more.

Hereinafter, some embodiments of a fluid management device of the present invention will be described in detail with reference to the accompanying drawings. In the case of no conflict, the following embodiments and features in the embodiments can be combined with each other.

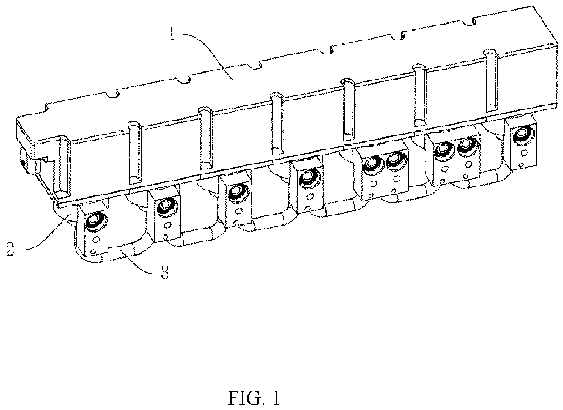

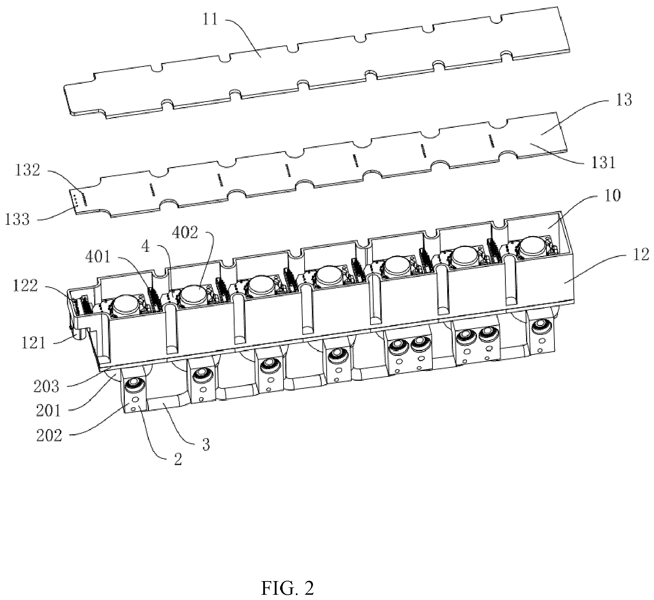

According to an embodiment of the fluid management device of the present invention, with reference to FIG. 1 to FIG. 6, the fluid management device includes a control assembly 1, at least two block portions 2 and at least two valve core assemblies 4. The valve core assembly 4 and the block portion 2 are in a one-to-one correspondence manner. Each block portion 2 is provided separately. At least two block portions 2 are mounted to and hermetically connected to the same control assembly 1. A portion of the valve core assembly 4 is located in an inner cavity of the control assembly 1, and another portion of the valve core assembly 4 is located in an inner cavity of the block portion 2. The valve core assembly 4 is installed and fixed through at least one of the control assembly 1 and the block portion 2. The number of the block portion 2 and the valve core assembly 4 is set according to the system requirements.

The control assembly 1 includes a first shell 11, a second shell 12 and a circuit board 13. The first shell 11 and the second shell 12 are installed together. The control assembly 1 has an assembly cavity 10 located between the first shell 11 and the second shell 12. The circuit board 13 is located in the assembly cavity 10 and is electrically connected to the valve core assemblies 4. Optionally, both the first shell 11 and the second shell 12 are made of plastic material, which has the advantages of being light in weight, easy to shape, and has good insulation properties.

In the present invention, the valve core assembly 4 is a standardized component. The structure of each valve core assembly 4 is roughly the same, and the detailed structure can be adjusted according to specific needs. Each valve core assembly 4 includes a connecting portion 401 and a valve core portion 402. The valve core portion 402 includes a shell portion 403 and a valve needle 404. The shell portion 403 is fixedly installed. The connecting portion 41 is fixed and electrically connected to the circuit board 13. The connecting portion 41 is fixed and electrically connected to the shell portion 403. The valve needle 404 is located in an inner cavity of the shell portion 403. The valve needle 404 is movable in an axial direction of the valve core assembly 4 so that an end portion of the valve needle 404 is closer to or farther away from the block portion 2.

The shell portion 403 includes a stator assembly and a rotor assembly. The stator assembly is sleeved on an outside of the rotor assembly. A gap is formed between the stator assembly and the rotor assembly. The valve needle 404 is located within the rotor assembly. The stator assembly is energized to produce a magnetic field. The magnetic field causes some parts of the rotor assembly to rotate, and the rotating parts drive the valve needle 404 to move up and down. The stator assembly is located in the assembly cavity 10. The stator assembly is fixed to the second shell 12. The connecting portion 401 is fixed and electrically connected to the stator assembly. A portion of the rotor assembly is located in the assembly cavity 10, and another portion of the rotor assembly is located in the mounting channel 20. The rotor assembly is fixed to the block portion 2.

During assembly, the stator assembly is assembled with the second shell 12, the rotor assembly is assembled with the block portion 2, and the block portion 2 and the first shell 11 are assembled with the second shell 12, respectively.

In the present invention, the valve core assembly 4 includes a mechanical part but does not include an electronic control part. The electronic control part that controls how the valve core assembly 4 moves is provided in the control assembly 1. In some embodiments, the connecting portions 401 of all valve core assemblies 4 are fixed and electrically connected to the same circuit board 13, and corresponding electrical control parts of all the valve core assemblies 4 are provided on the same circuit board 13. The control of all the valve core assemblies 4 is realized through the circuits on one circuit board 13, which can improve the level of integration, facilitate the miniaturization of the control assembly 1, and facilitate the optimization of control logic.

It should be understood that the control assembly 1, one valve core assembly 4 and one block portion 2 together can realize the function of an expansion valve or a solenoid valve. The structure of the valve needle 404 corresponding to the expansion valve and the solenoid valve is different, and the corresponding valve needle 404 structure can be selected according to system requirements.

The first shell 11 or the second shell 12 includes a plug portion 121. The plug portion 121 is configured to cooperate with other plug structures to achieve electrical connection between the control assembly 1 and other components outside the fluid management device. The fluid management device is provided with a number of pins 122 which are fixedly connected to the plug portion 121. The pins 122 are fixed and electrically connected to the circuit board 13. The pins 122 are also in contact with and electrically connected to other components outside of the fluid management device.

The circuit board 13 includes a plate body 131, a plurality of first hole portions 132 and a plurality of second hole portions 133. A cavity of the first hole portion 132 and a cavity of the second hole portion 133 both extend through the plate body 131 along a thickness direction of the plate body 131. A control chip and other electronic devices are disposed on the plate body 131. The connecting portion 401 of the valve core assembly 4 defines a cavity partially located in the first hole portion 132, and the connecting portion 401 is fixedly connected to the first hole portion 132. The first hole portion 132 and the connecting portion 401 are in a one-to-one correspondence manner. The pin 122 of the plug portion 121 is partially located in the cavity of the second hole portion 133. The pin 122 is fixedly connected to the second hole portion 133. Optionally, the plate body 131 is an integral piece. All the connecting portions 401 of the valve core assembly 4 are fixed and electrically connected to the plate body 131.

In the present invention, the block portion 2 is a standardized component. In this embodiment, the structure of each block portion 2 is roughly the same, and the detailed structure can be adjusted according to specific needs. Each block portion 2 includes a body portion 201 and at least one port portion 202. The body portion 201 and the port portion 202 are connected. The port portion 202 has a port channel. The port portion 202 is configured for being connected with pipelines. The port channel is in communication with a pipe cavity of the pipeline. The body portion 201 has the mounting channel 20. The shell portion 403 of the valve core assembly 4 is partially located in the mounting channel 20. In some embodiments, one end of the shell portion 403 abuts against the circuit board 13 along the axial direction of the valve core assembly 4, and the other end of the shell portion 403 is in contact with a hole wall located on a peripheral side of the mounting channel 20. The circuit board 13 is fixedly arranged with the first shell 11 or the second shell 12. The block portion 2 is fixedly connected to the second shell 12, so that the shell portion 403 can be limited and fixed in the axial direction of the valve core assembly 4. In some other embodiments, the shell portion 403 can be limited only by the second shell 12, as long as the shell portion 403 can be limited and fixed, which is not limited by the present invention. Optionally, the block portion 2 is an integral piece.

In some embodiments, each block portion 2 includes an extension portion 203. The extension portion 203 extends outward from a peripheral edge of a side of the body portion 201 close to the second shell 12. The extension portion 203 is hermetically connected with the second shell 12. The extension portion 203 is generally annular and is disposed around the body portion 201. The extension portion 203 is generally plate-shaped. The extension portion 203 and the second shell 12 are in surface-to-surface contact, which can improve the assembly reliability between the block portion 2 and the second shell 12. Optionally, the extension portion 203 defines a groove for accommodating a sealing ring, so that the sealing performance between the extension portion 203 and the second shell 12 is improved.

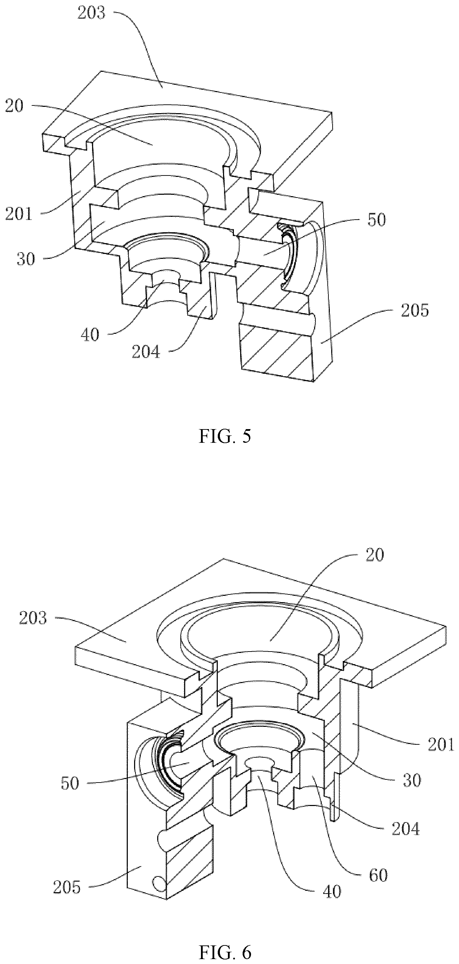

In some embodiments, the block portion 2 has two ports. Referring to FIG. 5, the block portion 2 includes a first port portion 204 and a second port portion 205. The first port portion 204 is located on a side of the block portion 2 away from the control assembly 1. The second port portion 205 is located on a peripheral side of the block portion 2. Both the first port portion 204 and the second port portion 205 protrude outward from the body portion 201. The first port portion 204 and the second port portion 205 are both connected to the body portion 201. The first port portion 204 defines a first port channel 40. The second port portion 205 defines a second port channel 50. The body portion 201 defines a communication channel 30. The second port channel 50 is in communication with the communication channel 30.

In some embodiments, the block portion 2 has two ports. Referring to FIG. 6, the block portion 2 includes a first port portion 204. The first port portion 204 is located on a side of the block portion 2 away from the control assembly 1. The first port portion 204 protrudes outward from the body portion 201. The first port portion 204 is connected to the body portion 201. The first port portion 204 defines a first port channel 40 and a third port channel 60. The first port channel 40 and the third port channel 60 are not in communication in the first port portion 204. The body portion 201 defines a communication channel 30. The third port channel 60 is in communication with the communication channel 30.

In some embodiments, the block portion 2 defines three ports. Referring to FIG. 6, the block portion 2 includes a first port portion 204 and a second port portion 205. The first port portion 204 is located on a side of the block portion 2 away from the control assembly 1. The second port portion 205 is located on a peripheral side of the block portion 2. Both the first port portion 204 and the second port portion 205 protrude outward from the body portion 201. The first port portion 204 and the second port portion 205 are both connected to the body portion 201. The first port portion 204 defines a first port channel 40 and a third port channel 60. The second port portion 205 defines a second port channel 50. The body portion 201 defines a communication channel 30. The second port channel 50 and the third port channel 60 are both in communication with the communication channel 30.

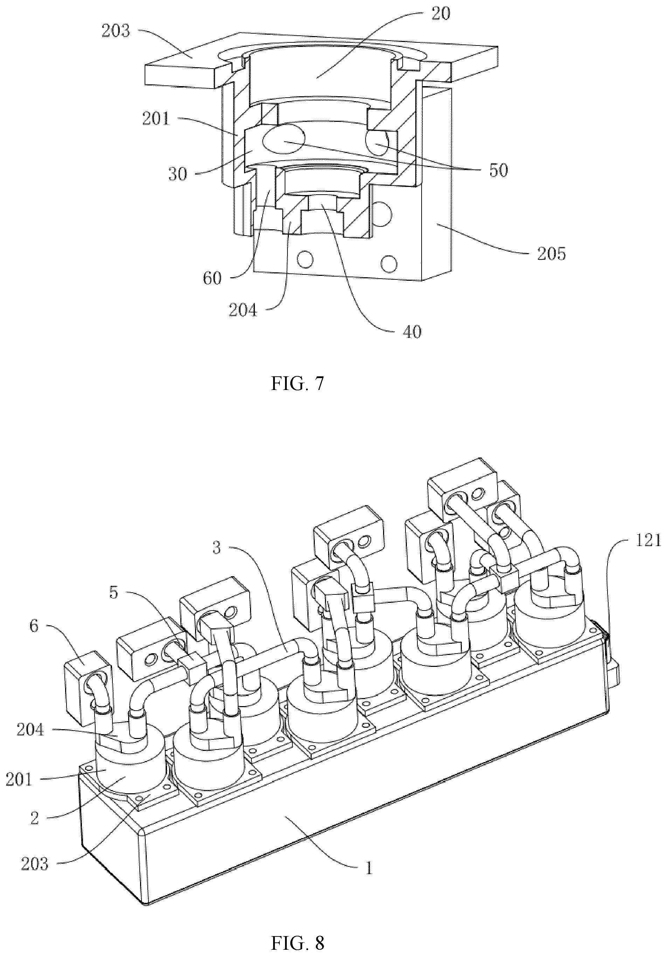

In some embodiments, the block portion 2 defines three ports. Referring to FIG. 7, the block portion 2 includes a first port portion 204 and a second port portion 205. The first port portion 204 is located on a side of the block portion 2 away from the control assembly 1. The second port portion 205 is located on a peripheral side of the block portion 2. Both the first port portion 204 and the second port portion 205 protrude outward from the body portion 201. The first port portion 204 and the second port portion 205 are both connected to the body portion 201. The first port portion 204 defines a first port channel 40. The second port portion 205 defines two second port channels 50. The body portion 201 defines a communication channel 30. Each second port channel 50 is in communication with the communication channel 30.

In some embodiments, the block portion 2 has four ports. Referring to FIG. 7, the block portion 2 includes a first port portion 204 and a second port portion 205. The first port portion 204 is located on a side of the block portion 2 away from the control assembly 1. The second port portion 205 is located on a peripheral side of the block portion 2. Both the first port portion 204 and the second port portion 205 protrude outward from the body portion 201. The first port portion 204 and the second port portion 205 are both connected to the body portion 201. The first port portion 204 defines a first port channel 40 and a third port channel 60. The second port portion 205 defines at least two second port channels 50. The body portion 201 defines a communication channel 30. The third port channel 60 and each second port channel 50 are in communication with the communication channel 30.

When the above-mentioned block portion 2 has three or more ports, the block portion 2 has a function of making multiple components in communication. The block portion 2 can divert the fluid flowing out of the first port channel 40 to the second port channel 50 and/or the third port channel 60; or The block portion 2 can realize that the fluid flowing out of the second port channel 50 and/or the third port channel 60 can be merged into the first port channel 40.

In the above-mentioned block portion 2, when the valve core assembly 4 is in a first state, the valve needle 404 is abutted against the first port portion 204, the valve needle 404 blocks one end of the first port channel 40, and the first port channel 40 and the communication channel 30 are isolated from each other at the valve needle 404. When the valve core assembly 4 is in a second state, the valve needle 404 is separated from the first port portion 204 by a certain distance, the first port channel 40 is in communication with the communication channel 30 to realize the function of an expansion valve or a solenoid valve.

According to different system requirements, the block portion 2 may have only the first port portion 204, or may have both the first port portion 204 and the second port portion 205. By setting the number of the second port channel 50 and the third port channel 60, the function of making multiple components in communication is realized.

In the present invention, the use of standardized valve core assemblies 4 and block portions 2 facilitates product standardization, reduces the number of molds to be opened, and reduces costs. In addition, this can simplify the product structure, facilitate manufacturing, and reduce assembly difficulty. The port portions 202 are arranged in the same direction, which is beneficial to the layout and design of the pipelines, reduces the occupied space, and facilitates integration.

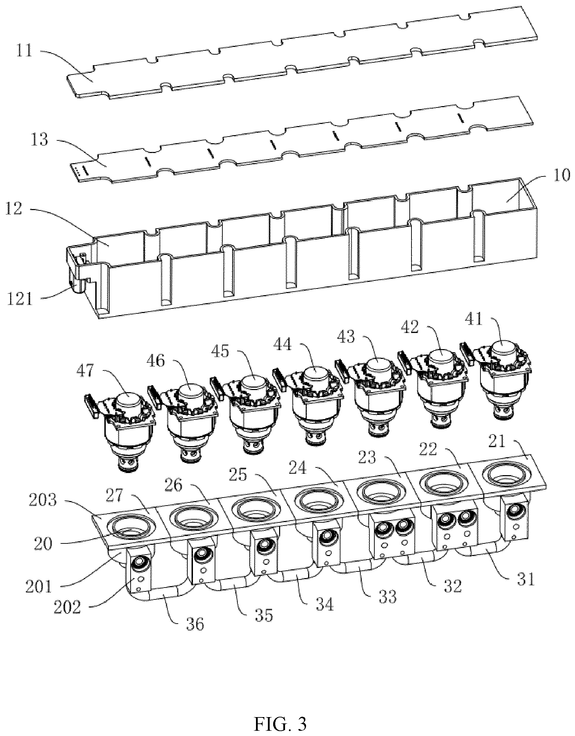

Referring to FIG. 3, two adjacent block portions 2 are arranged separately. Each block portion 2 is formed separately, and then installed and fixed with the same control assembly 1 respectively. A gap is formed between adjacent body portions 201. Such an arrangement can reduce the possibility of heat transfer between the body portions 201 while achieving integration, reduce harmful heat loss, and improve system performance. Optionally, the second shell 12 is an integral piece.

The body portion 201 has a hollow cylindrical structure. The cross-section of the body portion 201 is roughly annular, which can occupy the smallest possible space, have the greatest possible strength, and is beneficial to miniaturization of the fluid management device.

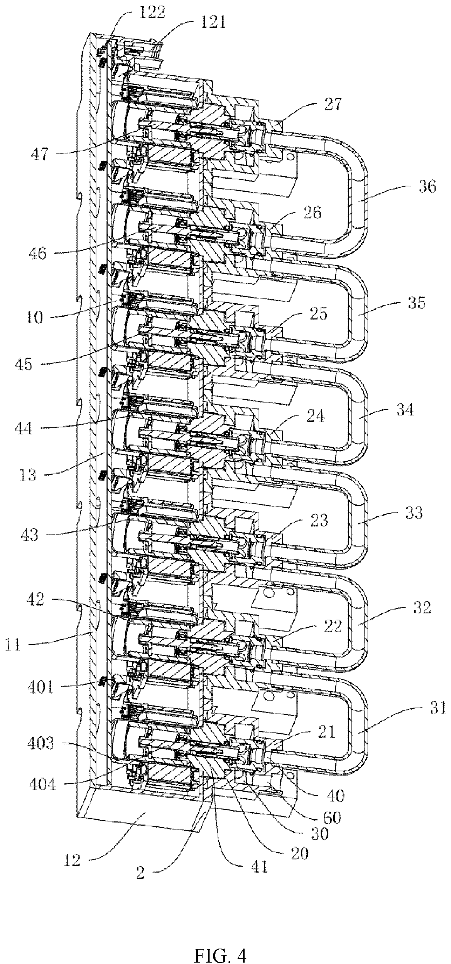

The fluid management device includes a plurality of pipes 3. The pipe 3 has a hollow cylindrical structure. One end of the pipe 3 is hermetically connected to the port portion 202 of one block portion 2, and the other end of the pipe 3 is hermetically connected to the port portion 202 of another block portion 2. An inner cavity of the pipe 3 realizes the communication between the inner cavities of the two block portions 2. For example, referring to FIG. 4, one end of the pipe 3 is hermetically connected to the first port portion 204 of the block portion 2, and the other end of the same pipe 3 is hermetically connected to the first port portion 204 of another block portion 2. The inner cavity of the pipe 3 communicates with the first port channel 40 of one block portion 2 and the third port channel 60 of another block portion 2. It is also possible that one end of the pipe 3 is hermetically connected to the first port portion 204 of one block portion 2, and the other end of the pipe 3 is hermetically connected to the second port portion 205 of another block portion 2. The inner cavity of the pipe 3 communicates with the first port channel 40 of one block portion 2 and the second port channel 50 of another block portion 2. The block portions 2 are in communication through the pipes 3. Compared with providing channels in a large one-piece block structure, the design disclosed in the present invention can reduce weight and reduce heat loss. Furthermore, the pipe 3 is a standardized component, and an appropriate length of the pipe 3 can be selected, which can reduce manufacturing difficulty.

Taking the fluid management device including two valve core assemblies 4, two block portions 2 and one pipe 3 as an example, referring to FIG. 1 to FIG. 4, the fluid management device includes a control assembly 1, a first valve core assembly 41, a second valve core assembly 42, a first block portion 21, a second block portion 22 and a first pipe 31. The first block portion 21 and the second block portion 22 are both installed and fixed with the second shell 12 of the control assembly 1. The extension portion 203 of the first block portion 21 and the extension portion 203 of the second block portion 22 are both hermetically connected to the second shell 12.

As shown in FIG. 3 and FIG. 4, the extension portion 203 of the first block portion 21 and the extension portion 203 of the second block portion 22 are in contact with each other. However, there is a gap between the body portion 201 of the first block portion 21 and the body portion 201 of the second block portion 22, and there is no contact between them. By providing the extension portion 203 in the block portion 2, the connection reliability between the block portion 2 and the second shell 12 can be improved, and the distance between two adjacent block portions 2 can also be limited, which reduces the installation difficulty and improves assembly accuracy.

A portion of the first valve core assembly 41 is located in the assembly cavity 10 of the control assembly 1, and another portion of the first valve core assembly 41 is located in the mounting channel 20 of the first block portion 21. A portion of the second valve core assembly 42 is located in the assembly cavity 10 of the control assembly 1, and another portion of the second valve core assembly 42 is located in the mounting channel 20 of the second block portion 22. The connecting portion 401 of the first valve core assembly 41 and the connecting portion 401 of the second valve core assembly 42 are both fixed and electrically connected to the circuit board 13. The plate body 131 of the circuit board 13 has an integrated structure. The first valve core assembly 41 and the second valve core assembly 42 are spaced apart from each other in the assembly cavity 10. The first valve core assembly 41 is fixed to at least one of the second shell 12 and the first block portion 21. The second valve core assembly 42 is fixed to at least one of the second shell 12 and the second block portion 22.

The control assembly 1, the first valve core assembly 41 and the first block portion 21 together can realize the function of an expansion valve or a solenoid valve. The control assembly 1, the second valve core assembly 42 and the second block portion 22 together can realize the function of an expansion valve or a solenoid valve. In this embodiment, the structures of the first valve core assembly 41 and the second valve core assembly 42 are basically the same, and the valve needle 404 can be set to implement different functions according to system requirements. The structures of the first block portion 21 and the second block portion 22 are basically the same, and the port portion 202 can be provided according to system requirements to facilitate connection of pipelines.

In some other embodiments, the fluid management device may further include more valve core assemblies 4, more block portions 2 and more pipes 3. As shown in FIG. 3 and FIG. 4, the fluid management device may include seven valve core assemblies 4, seven block portions 2 and six pipes 3. The control assembly 1 includes a circuit board 13. The seven valve core assemblies 4 are respectively a first valve core assembly 41, a second valve core assembly 42, a third valve core assembly 43, a fourth valve core assembly 44, a fifth valve core assembly 45, a sixth valve core assembly 46 and a seventh valve core assembly 47. The seven block portions 2 are a first block portion 21, a second block portion 22, a third block portion 23, a fourth block portion 24, a fifth block portion 25, a sixth block portion 26 and a seventh block portion 27. The six pipes 3 are a first pipe 31, a second pipe 32, a third pipe 33, a fourth pipe 34, a fifth pipe 35 and a sixth pipe 36. The seven block portions 2 are evenly arranged and are hermetically connected to the second shell 12 respectively. The structures of the seven block portions 2 are substantially the same, and the extension portions 203 of two adjacent block portions 2 are in contact with each other. The connecting portions 401 of the seven valve core assemblies 4 are all fixed and electrically connected to the same circuit board 13. Two ends of each pipe 3 are connected to two block portions 2, respectively. According to the corresponding function of the valve core assembly 4 in the system, an appropriate structure of the valve needle 404 is selected. The number of the second port channels 50 and the third port channels 60 is selected according to whether the block portion 2 needs to have a function of making multiple components in communication.

In this embodiment, referring to FIG. 3, the seven valve core assemblies 4 are arranged in a line along a length direction of the control assembly 1. Correspondingly, the seven block portions 2 are also arranged in a line along the length direction of the control assembly 1. The valve core assemblies 4 should be as close as possible and the structure of the block portion 2 should be as streamlined as possible, so that the structure of the fluid management device is more compact, the length of the system pipeline can also be shortened, and the response time and performance of the system can be improved. The six pipes 3 are all connected to the first port portion 204. The pipes 3 are all located on the same side of the fluid management device. Each pipe 3 is roughly U-shaped, which is convenient for pipeline connection. The separation between the body portions 201 of two adjacent block portions 2 is beneficial to reduce harmful heat loss and improving performance. Integrating valves together saves space for the entire vehicle layout, while improving installation efficiency and reducing costs.

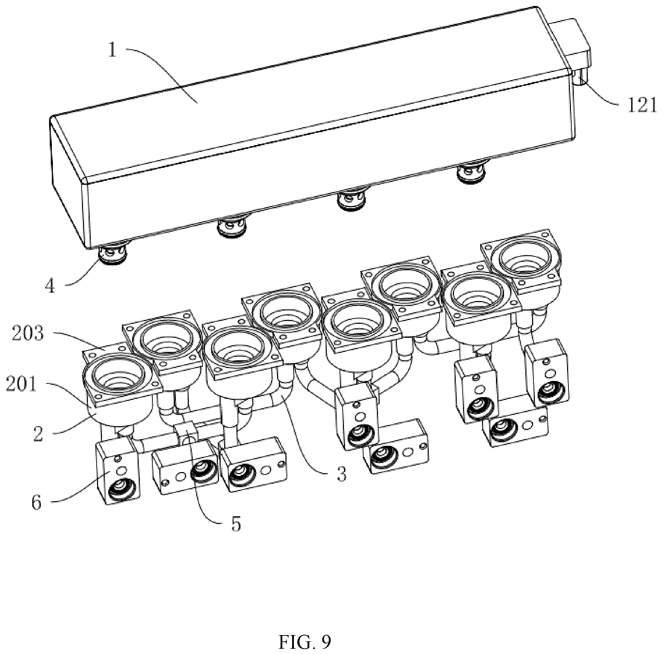

In a possible embodiment, referring to FIG. 8 and FIG. 9, multiple valve core assemblies 4 may be arranged in two rows or distributed in a matrix, and multiple valve core assemblies 4 and multiple block portions 2 are arranged in a staggered manner, so that the occupied space is smaller, or the arrangement of the pipes 3 is more reasonably.

In a possible embodiment, referring to FIG. 8 and FIG. 9, the structure of the block portion 2 is completely standardized. The structures of all block portions 2 are exactly the same. The block portion 2 defines a first port portion 204. The first port portion 204 has a first port channel 40 and a third port channel 60. The block portion 2 is not provided with a second port portion 205.

In this embodiment, the fluid management device includes a plurality of pipes 3, a plurality of multi-pass parts 5 and a plurality of connecting blocks 6. The connecting block 6 is generally block-shaped and is used for connecting and communicating with pipelines outside the fluid management device. The multi-pass part 5 is generally block-shaped and has at least three ports. Each port is connected to one pipe 3 for achieving connection and communication between the pipes 3. The connecting block 6 and the multi-pass part 5 are small in size and use a smaller structure to realize the functions of connection and connectivity at the same time, thereby reducing the occupied space and improving the integration level. Optionally, the ports of all connecting blocks 6 face the same direction so as to facilitate connection with external pipelines.

The inner cavities of any two block portions 2 are in communication through the pipe 3 and the multi-pass part 5. The inner cavity of the block portion 2 and the inner cavity of the connecting block 6 are in communication through the pipe 3 and the multi-pass part 5. The communication relationship between each block portion 2, the number of block portions 2, the number of connecting blocks 6, the number of pipes 3 and the number of multi-pass parts 5 can be selected according to system design requirements.

It should be understood that the drawings of the present invention are only exemplary illustrations, and it should not be understood that the components in the fluid management device can only be arranged as shown in the drawings, nor should it be understood that it can only be constructed in the shape shown.

The above embodiments are only used to illustrate the present invention and not to limit the technical solutions described in the present invention. The understanding of this specification should be based on those skilled in the art. Descriptions of directions, although they have been described in detail in the above-mentioned embodiments of the present invention, those skilled in the art should understand that modifications or equivalent substitutions can still be made to the application, and all technical solutions and improvements that do not depart from the spirit and scope of the application should be covered by the claims of the application.

## Claims

1. A fluid management device, **characterized by** comprising:
a control assembly (1);
at least two block portions (2) being hermetically connected to the control assembly (1); and
at least two valve core assemblies (4) being electrically connected to the control assembly (1);
wherein each of the at least two block portions (2) comprises a body portion (201) which defines a mounting channel (20); a portion of the at least two valve core assemblies (4) is located in an inner cavity of the control assembly (1), and another portion of the at least two valve core assemblies (4) is located in the mounting channel (20); a gap is formed between two adjacent body portions (201).

2. The fluid management device according to claim 1, wherein the control assembly (1) comprises a first shell (11), a second shell (12) and a circuit board (13); the first shell (11) is hermetically connected to the second shell (12); the control assembly (1) defines an assembly cavity (10) which is located between the first shell (11) and the second shell (12); the circuit board (13) is located in the assembly cavity (10); the at least two block portions (2) are both connected to the second shell (12); the second shell (12) is an integral piece;
part of the at least two valve core assemblies (4) is located in the assembly cavity (10); the at least two valve core assemblies (4) are electrically connected to the circuit board (13); the control assembly (1) comprises a control chip mounted to the circuit board (13); the control chip is configured to control an action of the at least two valve core assemblies (4); the control chip comprises an electronic control part that controls the action of the at least two valve core assemblies (4);
the circuit board (13) comprises a plate body (131); the at least two valve core assemblies (4) are electrically connected to the plate body (131); the plate body (131) is an integral piece.

3. The fluid management device according to claim 2, wherein each valve core assembly (4) comprises a connecting portion (401) and a valve core portion (402); the connecting portion (401) is fixed and electrically connected to the circuit board (13); the connecting portion (401) is fixed and electrically connected to the valve core portion (402);
along an axial direction of the valve core assembly (4), one end of the valve core portion (402) cooperates with the circuit board (13) or the second shell (12), and another end of the valve core portion (402) cooperates with the block portion (2).

4. The fluid management device according to claim 3, wherein each valve core portion (402) comprises a shell portion (403) and a valve needle (404); one end of the shell portion (403) cooperates with the circuit board (13) or the second shell (12), and another end of the shell portion (403) cooperates with the block portion (2); the valve needle (404) is at least partially located in an inner cavity of the shell portion (403); the valve needle (404) is movable in the axial direction of the valve core assembly (4).

5. The fluid management device according to claim 4, wherein the block portion (2) comprises at least one port portion (202); the body portion (201) is connected to the port portion (202); the body portion (201) defines a communication channel (30); part of the shell portion (403) is located in the mounting channel (20); the port portion (202) defines a port channel (40, 50, 60) configured to communicate with the communication channel (30).

6. The fluid management device according to claim 5, wherein the at least one port portion (202) comprises a first port portion (204); the first port portion (204) is located on a side of the block portion (2) away from the control assembly (1); the first port portion (204) is connected to the body portion (201); the first port portion (204) defines a first port channel (40);
when the valve core assembly (4) is in a first state, the valve needle (404) is abutted against the first port portion (204), the valve needle (404) blocks one end of the first port channel (40), the communication channel (30) and the first port channel (40) are isolated at the valve needle (404); and
when the valve core assembly (4) is in a second state, the valve needle (404) is separated from the first port portion (204) by a certain distance, and the communication channel (30) is in communication with the first port channel (40).

7. The fluid management device according to claim 5, wherein the at least one port portion (202) comprises a second port portion (205) which is located on a peripheral side of the block portion (2); the second port portion (205) is connected to the body portion (201); the second port portion (205) defines at least one second port channel (50) which is in communication with the communication channel (30).

8. The fluid management device according to claim 6, wherein the first port portion (204) defines at least one third port channel (60) which is in communication with the communication channel (30).

9. The fluid management device according to claim 1, further comprising at least one pipe (3); wherein one end of the at least one pipe (3) is hermetically connected to one of the at least two block portions (2), and another end of the at least one pipe (3) is hermetically connected to another one of the at least two block portions (2); an inner cavity of the at least one pipe (3) is in communication with inner cavities of any two of the block portions (2).

10. The fluid management device according to claim 1, wherein the block portion (2) comprises an extension portion (203) which extends from a side of the body portion (201) close to the control assembly (1) toward a circumferential side; the extension portion (203) is hermetically connected to the control assembly (1); the block portion (2) is an integral piece.

11. The fluid management device according to claim 1, wherein the valve core assembly (4) is a standardized component, and a structure of each valve core assembly (4) is the same;
the block portion (2) is a standardized component, and a structure of each block portion (2) is the same.

12. The fluid management device according to claim 9, wherein the pipe (3) is a standardized component, an appropriate length of the pipe (3) can be selected; the pipe (3) has a hollow cylindrical structure.

13. The fluid management device according to claim 1, wherein multiple valve core assemblies (4) are provided and arranged in a line along a length direction of the control assembly (1), and multiple block portions (2) are provided and arranged in a line along the length direction of the control assembly (1).

14. The fluid management device according to claim 1, wherein multiple valve core assemblies (4) are provided and arranged in two rows, multiple block portions (2) are provided, and the multiple valve core assemblies (4) and the multiple block portions (2) are arranged in a staggered manner.

15. The fluid management device according to claim 1, wherein multiple valve core assemblies (4) are provided and distributed in a matrix, multiple block portions (2) are provided, and the multiple valve core assemblies (4) and the multiple block portions (2) are arranged in a staggered manner.
